# EUROPEAN PATENT SPECIFICATION

(11) **EP 0 873 178 B1**
(45) Date of publication and mention of the grant of the patent: **21.11.2001**
(21) Application number: 96900886.1
(22) Date of filing: 22.01.1996
(51) Int. Cl.: B01F 5/04, B05B 1/34

(54) **ATOMIZER**
ZERSTÄUBER
ATOMISEUR

(30) Priority: 20.01.1995 DK 6295
(43) Date of publication of application: 28.10.1998
(73) Proprietor: Danfoil Production S.K. A/S, 9670 Logstor (DK)
(72) Inventor: OLESEN, Alfred, DK-8733 Hornsyld (DK)
(74) Representative: Nielsen, Leif
(86) International application number: DK9600035
(87) International publication number: WO9622155

(56) References cited:
- WO-A-87/00078

## Description

The present invention relates to an atomizer having an airfoil wing atomizer member to be used for atomizing a first flow medium when arranged in a channel for another flow medium, said member having a hole at its broad side for introduction of said first flow medium, this member having its thicker, rounded front edge pointing upstream of the flowing direction of the other flow medium and over its rear portion being profiled with opposite surfaces converging towards a rear line of intersection.

Such an atomizer is known e.g. from WO-A-8700078. These atomizers, however, produce amounts of very fine particles exhibiting a large drifting, which is an undesired phenomenon. The particles are so small that they are not brought along in the operative current from the atomizer, but are carried by the surrounding atmosphere. The phenomenon is undesired already because the first flow medium, which may be an expensive additive is not utilized fully. Also, poisonous sprays may be involved, where the drifting may cause damage to other plantation or to animal and human beings by inhalation. In the open air, the drifting of the small particles may float over long distances, depending of weather conditions and droplet sizes.

With the invention, however, it has been found, surprisingly, that the phenomenon can be avoided in an atomizer being characterised in that the rear edge of the airfoil wing member is planar or rounded or provided with a V-shaped groove. When the rear edge of the profile is not sharp, the phenomenon of the fine particles with large drifting simply does not occur. A better concentration of the droplets about a certain droplet size is achieved, and the average droplet size is decreased. A consequence of this is an improved and more accurate adjustability of the spraying. Moreover, the spraying result becomes more uniform.

In the following, embodiments of the invention will be described in more detail with reference to the drawing, in which:
- Fig. 1: shows an embodiment of an airfoil wing member according to the invention, seen directly from above;
- Fig. 2: shows the wing member directly from the side, with a first shape of the rear edge;
- Fig. 3: shows the wing member directly from the side, with another shape of the rear edge;
- Fig. 4: shows the wing member directly from the side, with a third shape of the rear edge;
- Fig. 5: shows a perspective view of a tractor carried field sprayer; and
- Fig. 6: shows a cross section of an atomizer for this sprayer.

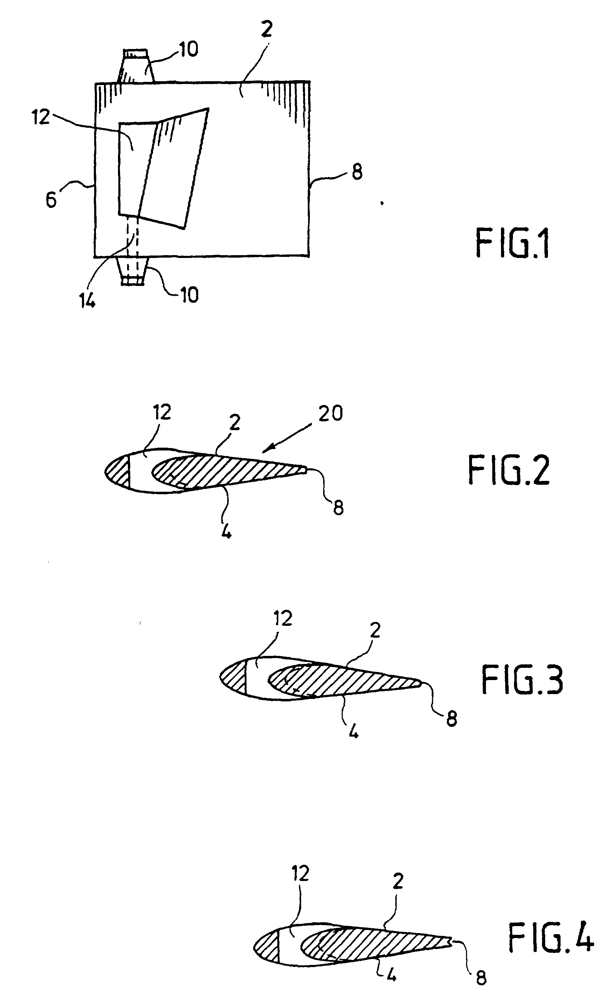

In the drawing, the top side of the illustrated atomizer airfoil wing member is designated 2, the bottom side 4, the front edge 6 and the rear edge 8. The atomizer member has two side protrusions 10, with which it is mounted in a flow channel (not shown) for another flow medium, oriented with its rear end downstream of the flow. A first flow medium is introduced into a hole 12 open to the top and bottom sides of the wing member. The general layout of the wing member is described in WO-A-8700078. The novelty of this invention resides in the shape of the rear edge, which is here terminated in a flat, blunted manner as shown in Fig. 2. With this shape of the rear edge the phenomenon of the very fine particles with marked driftage is avoided.

Another shape of the rear edge is shown in Fig. 3, where the edge is shown rounded, while Fig. 4 shows a termination at a V-shaped groove.

With this modest modification it has been found possible to do away with the problem of the minute particles with high driftage.

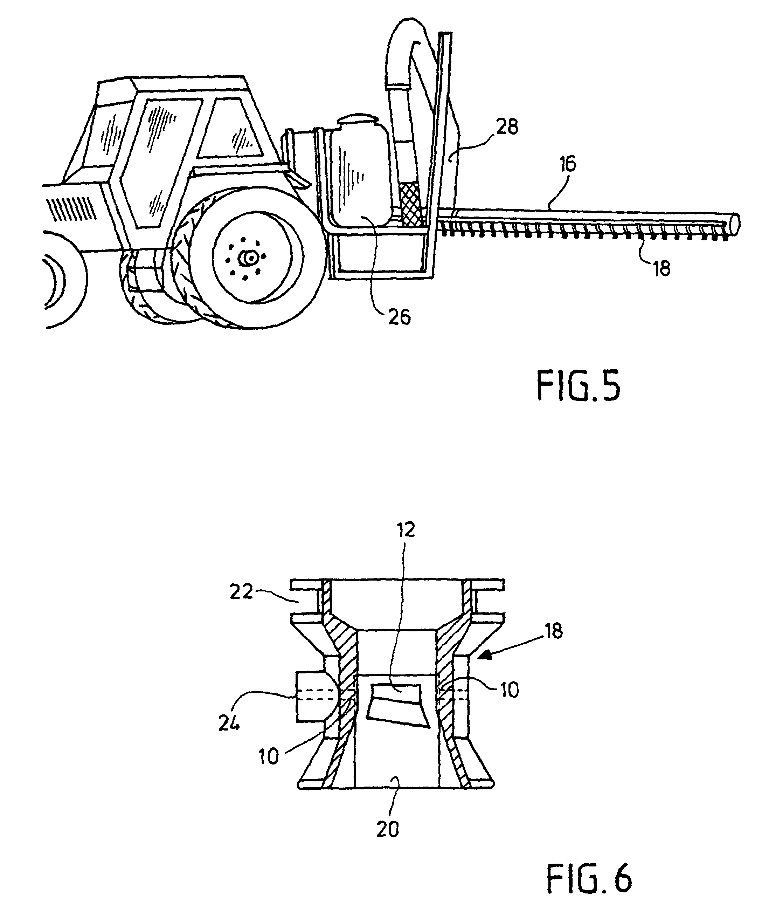

In Fig 5 of the drawing is schematically shown a tractor carried field sprayer with a trifurcated spreader boom 16. The sprayer is adapted for mounting in the lift mechanism of the tractor, and the two outermost sections of the spreader boom can be pivoted forwardly into a transport position in parallel with the tractor. The spreader boom is provided with atomizers 18 in the form of short ruer hose pieces having a collar 22 inserted in respective holes in the boom. Inside each ruer hose piece there is mounted an airfoil wing shaped atomizer member 20 as according to Fig. 2, pivotally mounted based on the two projections 10 for adjustment of the spray direction. Through the stub 24 the atomizer member is hose connected with the spray tank 26 via a supply pump and a distributor pipe 30. The spreader boom 16 is connected to a blower via the hose 28 for supply of air to the atomizers for the bringing along of the spray medium.

It has been found that the invention provides for a marked improved utilization of the spray agents, because the said driftage is largely avoided concurrently with the average size of the droplets being reduced. Obviously, the invention can be realized in other types of spraying equipment than just field sprayers.

## Claims

1. An atomizer having an airfoil wing atomizer member to be used for atomizing a first flow medium when arranged in a channel for another flow medium, said member (2) having a hole (12) at its broad side (2,4) for introduction of said first flow medium, this member having its thicker, rounded front edge (6) pointing upstream of the flowing direction of the other flow medium and over its rear portion being profiled with opposite surfaces (2,4) converging towards a rear line of intersection, **characterised in that** the rear edge (8) of the airfoil wing member is planar or rounded or provided with a V-shaped groove.

2. An atomizer according to claim 1, **characterised in that** the rear edge wall of the airfoil wing member is planar.

3. An atomizer according to claim 1, **characterised in that** the rear edge wall of the airfoil wing member is rounded.

4. An atomizer according to claim 1, **characterised in that** the rear edge wall of the airfoil wing member is provided with a v-shaped groove.

## Patentansprüche

1. Ein Zerstäuber mit einem Zerstäuberteil mit Tragflügelprofil zur Zerstäubung eines ersten Durchströmungsmediums wenn vorgesehen in einem Kanal für ein anderes Durchströmungsmedium, wobei das Teil (2) an seiner breiten Seite (2,4) ein Loch (12) zum Einrühren des genannten ersten Durchströmungsmediums aufweist, wobei die dickere, abgeründete vordere Kante (6) von diesem Teil in Verhältnis zur Durchströmungsrichtung des anderen Durchströmungsmediums aufwärts gerichtet ist und über seinem hinteren Teil mit entgegengesetzten Oberflächen (2,4) profiliert ist, die in Richtung einer hinteren Schnittlinie konvergieren, **dadurch gekennzeichnet, daß** die hintere Kante (8) des Tragflügelprofilteils eben oder abgeründet oder mit einer V-förmigen Rille versehen ist.

2. Ein Zerstäuber nach Anspruch 1, **dadurch gekennzeichet**, daß die hintere Kantwand des Tragflügelprofilteils eben ist.

3. Ein Zerstäuber nach Anspruch 1, **dadurch gekennzeichet**, daß die hintere Kantwand des Tragflügelprofilteils abgeründet ist.

4. Ein Zerstäuber nach Anspruch 1, **dadurch gekennzeichet**, daß die hintere Kantwand des Tragflügelprofilteils mit einer V-förmigen Rille versehen ist.

## Revendications

1. Atomiseur comprenant un organe d'atomiseur de profil d'aile destiné à la pulvérisation d'un premier fluide d'écoulement lorsque arrangé dans un canal pour un autre fluide d'écoulement, ledit organe (2) comprenant une ouverture (12) sur le plat (2, 4) pour l'introduction dudit premier fluide d'écoulement, ledit organe comprenant un bord frontal (6) arrondi plus large s'étendant vers l'amont de la direction d'écoulement de l'autre fluide d'écoulement et au dessus de sa partie arrière profilée de surfaces opposées (2,4) convergentes vers l'intersection arrière, **caractérisé en ce que** le bord arrière (8) de l'organe de profil d'aile est plan ou arrondi ou prévu d'une rainure en forme de V.

2. Atomiseur selon la revendication 1, **caractérisé en ce que** la paroi du bord arrière de l'organe de profil d'aile est plane.

3. Atomiseur selon la revendication 1, **caractérisé en ce que** la paroi du bord arrière de l'organe de profil d'aile est arrondie.

4. Atomiseur selon la revendication 1, **caractérisé en ce que** la paroi du bord arrière de l'organe de profil d'aile est prévue d'une rainure en forme de V.
